Europäisches Patentamt

European Patent Office

Office européen des brevets

(11) Numéro de publication : **0 451 072 A1**

# (12) DEMANDE DE BREVET EUROPEEN

(21) Numéro de dépôt : **91440023.9**

(51) Int. Cl.⁵ : **B23K 9/29**

(22) Date de dépôt : **28.03.91**

(30) Priorité : 05.04.90 FR 9004691

(43) Date de publication de la demande :
**09.10.91 Bulletin 91/41**

(84) Etats contractants désignés :
**AT BE CH DE DK ES GB GR IT LI LU NL SE**

(71) Demandeur : **Emilian, Bernard**
**Hameau Campagne**
**F-26250 Livron (FR)**

(72) Inventeur : **Emilian, Bernard**
**Hameau Campagne**
**F-26250 Livron (FR)**

(74) Mandataire : **Arbousse-Bastide, Jean-Claude**
**Philippe**
**CABINET ARBOUSSE BASTIDE 20, rue de**
**Copenhague**
**F-67000 Strasbourg (FR)**

(54) **Torche télédémontable de soudage à l'arc sous gaz de protection.**

(57)    Torche télédémontable de soudage à l'arc sous gaz de protection, insérée dans un bloc-support. (3) métallique fixé à l'extrémité du bras (5) du robot de soudage, dont il est électriquement isolé par un isolant (6).

Elle comporte une partie tronconique (1) renfermant le diffuseur (16) du gaz de protection et l'électrode (13), et une partie cylindrique (2) servant à sa fixation sur le robot de soudage et à sa télémanipulation, la partie tronconique (1) comprenant un tronc de cône (11) sur lequel est fixée une buse (12) de sortie du gaz de protection à l'intérieur de laquelle est placée l'électrode (13), le tronc de cône (11) comportant un espace annulaire (14) pour le passage du gaz de protection qui arrive jusqu'au diffuseur (16) par un canal (32) ménagé dans le bloc-support (3), deux gorges (15') pratiquées dans le tronc de cône (11), de part et d'autre de l'espace annulaire (14), assurant l'étanchéité de l'assemblage ; les pièces (1) et (2) étant solidarisées entre elles par un axe (24) qui leur permet de pivoter l'une par rapport à l'autre.

EP 0 451 072 A1

La présente invention se rapporte au soudage à l'arc sous gaz de protection, et concerne plus particulièrement une torche de soudage télédémontable.

La durée d'utilisation d'une torche de soudage est limitée par la durée de vie de l'électrode, qui est le plus souvent en tungstène et permet généralement de réaliser de 5 à 20 mètres de soudage.

Lorsque l'on travaille en zone hostile, et que l'on utilise un robot de soudage, il n'est pas aisé de remplacer l'électrode : il faut en effet soit ramener le robot, soit confier à un télémanipulateur l'opération, qui est délicate et nécessite une grande précision. Dans les deux cas l'opération entraîne une perte de temps.

La présente invention permet de remédier à cet inconvénient en proposant une torche télédémontable susceptible d'être fixée facilement sur le bras d'un robot de soudage par un télémanipulateur.

La torche de souddage selon l'invention est insérée dans un bloc métallique lui servant de support, fixé à l'extrémité du bras du robot de soudage, dont il est électriquement isolé, ledit bloc métallique comportant un perçage adapté à recevoir d'une part une pièce tronconique portant le diffuseur de gaz et l'électrode de soudage, et d'autre part une pièce cylindrique servant à la fixation de la première et à la télémanipulation de l'ensemble.

La pièce tronconique de la torche de soudage selon l'invention se positionne dans un evidement en tronc de cône ménagé dans le bloc-support, étant prolongée à l'extérieur par la buse et l'électrode.

La pièce cylindrique de la torche de soudage selon l'invention se positionne dans un logement de même forme ménagé dans le bloc-support, auquel elle peut être solidarisée efficacement par tout moyen approprié, tel qu'un filetage ou un système à baïonnette.

La pièce cylindrique et la pièce tronconique de la torche de soudage selon l'invention sont solidarisées entre elles au moyen d'un axe qui traverse la pièce cylindrique et se prolonge jusqu'à un logement ménagé dans la pièce tronconique, de manière à permettre la rotation libre de la pièce cylindrique par rapport à la pièce tronconique, en vue du montage ou du démontage de l'ensemble.

La pièce cylindrique de la torche de soudage selon l'invention est d'autre part prolongée, à sa face extérieure, par une tige destinée à permettre la préhension et la manipulation de l'ensemble par un télémanipulateur.

Le bloc-support métallique dans lequel est insérée la torche de soudage selon l'invention comporte les perçages nécessaires pour l'adduction du gaz de protection ainsi que jour l'arrivée et le départ du fluide de refroidissement, ainsi qu'un moyen approprié, tel qu'un trou taraudé, pour la fixation du pôle positif du circuit d'alimentation électrique.

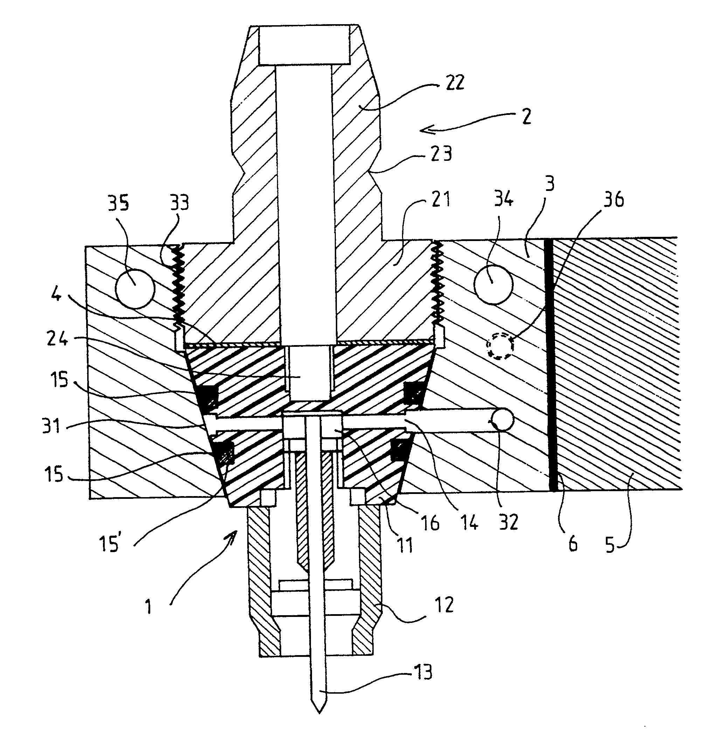

La présente invention sera mieux comprise à la lecture de la description qui suit d'un de ses modes de réalisation illustré par le dessin annexé, étant bien entendu que cette description ne présente aucun caractère limitatif vis-à-vis de l'invention.

L'unique figure du dessin annexé représente une vue en coupe axiale d'une torche de soudage selon l'invention, solidarisée au bras d'un robot de soudage.

La torche selon l'invention est composée d'une pièce tronconique 1 et d'une pièce cylindrique 2, cette dernière servant à la télémanipulation et à la fixation de la première dans le bloc métallique 3 solidarisé au bras 5 du robot de soudage.

La pièce tronconique 1 comprend un tronc de cône 11 en aluminium, sur lequel est fixée une buse 12 de sortie du gaz de protection à l'intérieur de laquelle est placée l'électrode en tungstène 13, qui en fait saillie.

Le tronc de cône 11 vient se loger dans un perçage 31 de même forme pratiqué dans le bloc métallique 3, qui est séparé du bras 5 du robot de soudage jar une plaque 6 d'une matière plastique isolante de 4 à 5 mm d'épaisseur.

Dans le tronc de cône 11 de la torche est ménagé une espace annulaire 14 permettant le passage du gaz de protection qui arrive jusqu'au diffuseur 16 par un canal 32 pratiqué dans le bloc-support 3 et débouchant dans le perçage 31 au niveau dudit espace annulaire 14. Deux joints toriques 15 sont insérés dans des gorges 15' pratiqués dans le tronc de cône 11, de part et d'autre de l'espace annulaire 14, prenant appui contre la paroi du perçage 31 de part et d'autre du canal 32 et assurant l'étanchéité de l'assemblage sans pour autant empêcher le contact électrique de se faire.

La pièce cylindrique 2 de la torche, réalisée en acier inoxydable, est composée d'un cylindre 21 surmonté d'une tige 22.

Le cylindre 21, de même diamètre que la base du tronc du cône 11, est fileté sur tout son pourtour, et s'insère dans un logement cylindrique 33, également fileté, ménagé dans le bloc-support 3, dans le prolongement du perçage tronconique 31.

Les pièces 1 et 2 de la torche sont solidarisées entre elles par un axe 24 leur permettant de pivoter l'une par rapport à l'autre, un joint 4 en téflon, placé entre le tronc de cône 11 et le cylindre 21, autour de l'axe 24, assurant une rotation aisée de l'une sur l'autre.

La tige 22 qui prolonge le cylindre 21 est de section hexagonale pour permettre au télémanipulateur, quand il l'a saisie, de faire tourner la partie 2 de la torche. Une encoche 23, pratiquée sur tout le pourtour de la tige 22, permet de bien assujettir celle-ci au télémanipulateur, grâce à un système approprié, par exemple une bille montée sur un ressort qui s'engagerait dans l'encoche 23.

Le bloc-support 3 comporte d'autre part des perçages 34 et 35 pour l'arrivée et le départ du fluide de refroidissement, et un trou taraudé 36 pour la fixation par vissage du pôle positif du circuit d'alimentation électrique.

Lorsque l'on veut fixer une torche au bras du robot, le télémanipulateur se saisit de celle-ci par la tige 22, l'encoche 23 empêchant qu'elle ne s'en sépare. Il introduit la torche dans le logement cylindrique 33 prolongé par le perçage 31 en tronc de cône, en opérant une rotation dans le sens des aiguilles d'une montre de manière à visser le cylindre 21 dans le logement cylindrique 33. Lorsque le tronc de cône 11 remplit le perçage tronconique 31, le télémanipulateur continue à visser le cylindre 21 dans le logement cylindrique 33 de manière à bien appliquer le tronc de cône 11 sur la paroi du perçage 31. Cette opération est facilitée par la liberté de rotation du tronc de cône 11 par rapport au cylindre 21, grâce à l'axe 24 et au joint 4. Quand le cylindre 21 est bloqué dans le logement cylindrique 33, le tronc de cône 11 est en place dans le perçage 31, les deux joints toriques 15 assurant l'étanchéité du contact. Le télémanipulateur peut alors se retirer en se désaccouplant de la tige 22.

Pour retirer une torche dont l'électrode est usée, il suffit d'effectuer l'opération inverse, c'est-à-dire de dévisser le cylindre 21 par l'intermédiaire de la tige 22 à l'aide du télémanipulateur.

La torche télédémontable selon l'invention présente l'avantage d'être d'une manipulation facile et sûre, offrant toutes les garanties nécessaires d'étanchéité vis-à-vis du gaz protecteur, notamment grâce aux deux joints toriques qu'elle comporte. Toutefois une qualité d'usinage suffisante peut permettre la suppression de ces joints, les gorges qui les abritent devenant alors des chambres de détente qui assurent l'étanchéité de l'assemblage.

Bien entendu, la présente invention ne saurait être limitée à la description qui précède d'un de ses modes de réalisation, susceptible de subir un certain nombre de modifications sans pour autant sortir du cadre de l'invention.

## Revendications

1) Torche télédémontable de soudage à l'arc sous gaz de protection, caractérisée en ce qu'elle est insérée dans un bloc-support (3) métallique fixé à l'extrémité du bras (5) du robot de soudage, dont il est électriquement isolé par un isolant (6), et en ce qu'elle comporte une partie tronconique (1) renfermant le diffuseur (16) du gaz de protection et l'électrode (13) et une partie cylindrique (2) servant à sa fixation sur le robot de soudage et à sa télémanipulation, la partie tronconique (1) comprenant un tronc de cône (11) sur lequel est fixée une buse (12) de sortie du gaz de protection à l'intérieur de laquelle est placée l'électrode (13), le tronc de cône (11) venant se loger dans un perçage tronconique (31) pratiqué dans le bloc-support (3) et comportant un espace annulaire (14) pour le passage du gaz de protection qui arrive jusqu'au diffuseur (16) par un canal (32) ménagé dans le bloc-support (3) et débouchant dans le perçage (31), deux gorges (15') pratiquées dans le tronc de cône (11), de part et d'autre de l'espace annulaire (14), assurant l'étanchéité de l'assemblage ; la partie cylindrique (2) étant formée d'un cylindre (21), de même diamètre que la base du tronc de cône (11), qui s'insère dans un logement cylindrique (31) ménagé dans le bloc-support (3), dans le prolongement du perçage (31), le cylindre (21) étant surmonté d'une tige (22) munie d'une encoche (23) pour permettre son assujettissement au télémanipulateur ; les pièces (1) et (2) étant solidarisées entre elles par un axe (24) qui leur permet de pivoter l'une par rapport à l'autre, et le cylindre (21) étant muni de moyens permettant sa solidarisation par rotation au bloc-support (3).

2) Torche télédémontable selon la revendication 1, caractérisée en ce que la pièce cylindrique (2) peut être solidarisée au bloc-support (3) au moyen d'un filetage pratiqué d'une part sur le cylindre (21) et d'autre part dans le logement cylindrique (33).

3) Torche télédémontable selon la revendication 1, caractérisée en ce que la pièce cylindrique (2) peut être solidarisée au bloc-support (3) au moyen d'un système à baïonnette permettant de bloquer le cylindre (21) dans le logement (33).

4) Torche télédémontable selon la revendication 1, caractérisée en ce que deux joints toriques (15) sont insérés dans les gorges (15').

5) Torche télédémontable selon l'une quelconque des revendications précédentes, caractérisée en ce qu'un joint (4) est placé entre le tronc le cône (11) et le cylindre (21), autour de l'axe (24).

6) Torche télédémontable selon la revendication 5, caractérisée en ce que le joint (4) est en téflon.

Office européen
des brevets

**RAPPORT DE RECHERCHE EUROPEENNE**

Numero de la demande

EP  91 44 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-151100 (ESAB)<br>* revendication 1; figures 1, 6 * | 1 | B23K9/29 |

**DOMAINES TECHNIQUES RECHERCHES (Int. Cl.5)**

B23K

Le présent rapport a été établi pour toutes les revendications

| Lieu de la recherche | Date d'achèvement de la recherche | Examinateur |
|---|---|---|
| LA HAYE | 16 JUILLET 1991 | DEMOLDER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)